Europäisches Patentamt

European Patent Office

Office européen des brevets

(11) Veröffentlichungsnummer : **0 090 929**
**B1**

(12) **EUROPÄISCHE PATENTSCHRIFT**

(45) Veröffentlichungstag der Patentschrift :
19.08.87

(21) Anmeldenummer : 83101345.3

(22) Anmeldetag : 12.02.83

(51) Int. Cl.⁴ : **B 23 B 29/02**

(54) **Tiefbohrwerkzeug.**

(30) Priorität : **18.03.82 DE 3209985**

(43) Veröffentlichungstag der Anmeldung :
**12.10.83 Patentblatt 83/41**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
**CH-A- 592 489**
**DE-B- 1 219 312**
**US-A- 2 641 940**

(73) Patentinhaber : **TBT Tiefbohrtechnik GmbH und Co.**
**KG.**
**Siemensstrasse 1**
**D-7433 Dettingen (DE)**

(72) Erfinder : **Armbruckner, Otto**
**Im Rain 8/2**
**D-7434 Riederich (DE)**

(74) Vertreter : **Dreiss, Uwe, Dr. jur. Dipl.-Ing. M.Sc. et al**
**Patentanwälte Dreiss, Hosenthien & Fuhlendorf**
**Gerokstrasse 6**
**D-7000 Stuttgart 1 (DE)**

EP 0 090 929 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft ein Tiefbohrwerkzeug mit einem einen Bohrkopf tragenden Schaft, der an seinem rückwärtigen Ende mit einem Spannelement zum Befestigen an einer Werkzeugmaschinenspindel versehen ist, wobei auf dem Bohrerschaft vor dem Spannelement ein Schwingungsdämpfer angeordnet ist.

Tiefbohrwerkzeuge sind spezielle dem Tiefbohrverfahren angepaßte Werkzeuge, die einen Innenkanal aufweisen. Bei dem sog. Einlippen-Bohrverfahren wird durch einen Kanal im Inneren des den Bohrkopf tragenden Schaftes das Kühl- und Schmiermittel an die Bohrstelle zugeführt, während die Abfuhr desselben einschl. der an der Bohrstelle entstehenden Späne über eine nach außen offene Nut im Schaft des Tiefbohrwerkzeuges erfolgt. Bei dem sog. BTA-Verfahren wird das Kühl- und Schmiermittel entlang des Umfangs eines am Bohrkopf tragenden Rohres an die Bohrstelle geführt und von dort über einen Kanal im Inneren des Rohres abgeleitet. Dieses Verfahren ist für größere Bohrdurchmesser geeignet.

Aufgabe der Erfindung ist es, Mittel zu schaffen, durch die die Abnützung und/oder die Geräuschentwicklung derartiger Tiefbohrwerkzeuge erheblich reduziert werden kann.

Erfindungsgemäß wird diese Aufgabe dadurch gelöst, daß der Schwingungsdämpfer durch eine den Schaft des Tiefbohrwerkzeuges über einen bestimmten Bereich umgebende Hülse gebildet ist, wobei der Zwischenraum zwischen der Hülse und dem äußeren Umfang des Schaftes mit einer elastischen festen Masse gefüllt ist, die sich direkt an die Außenfläche des Schaftes anschließt.

Es hat sich herausgestellt, daß die Verwendung eines derartigen Schwingungsdämpfers zu einer ganz erheblichen Erhöhung der Standzeiten bei Tiefbohrwerkzeugen führen kann. So wurde bei einem speziellen Einlippen-Bohrwerkzeug festgestellt, daß dieses ohne Verwendung des Schwingungsdämpfers nach etwa 30-maliger Verwendung abgenutzt war, während mit Verwendung des Schwingungsdämpfers eine entsprechende Abnützung erst nach 120 Einsätzen auftrat. Bei einem Werkzeug für das BTA-Verfahren zeigten sicht ebenfalls standzeiterhöhende bzw. geräuschmindernde Wirkungen.

Die Physikalischen Zusammenhänge der Wirkung eines derartigen Schwingungsdämpfers auf die Standzeiterhöhung bestehen offenbar darin, daß es entlang des Schaftes oder Rohres des Tiefbohrwerkzeuges gewisse Stellen gibt, an denen die Anordnung dämpfenden Materials Schwingungen so weit abbaut, daß das Bohren mit dem Bohrkopf mit weniger Abnützung erfolgt. Verwendet man einen Schwingungsdämpfer der genannten Art längere Zeit, so stellt sich heraus, daß das Dämpfungsmaterial, das den Dämpfungskörper bildet, mit der Oberfläche des Schaftes, über dem es angeordnet ist, eine innige Verbindung eingeht, die nur unter erheblichem Kraftaufwand mit einer Rohrzange oder dgl. wieder gelöst werden kann. Wichtig ist, daß sich der Dämpfungskörper bei einem Einlippen-Bohrwerkzeug auch in die Nut des Schaftes hineinerstreckt und sich ohne Zwischenraum an die äußere Oberfläche des Schaftes anschließet. Dem trägt ein bevorzugtes Herstellungsverfahren Rechnung, bei dem der Schaft an der gewünschten Stelle mit einer metallischen Hülse umgeben und diese ausgegossen wird. Dabei hängt die Länge, über die der Schwingungsdämpfer den Schaft bzw. das Rohr des Tiefbohrwerkzeuges umgibt, von der Werkzeuglänge und der Durchmesser der metallischen Hülse von dem Bohrkopfdurchmesser ab. Bei kurzem Tiefbohrwerkzeug ist der Schwingungsdämpfer in Nähe der den Schaft oder das Rohr aufnehmenden Hülse (2) und bei langem Tiefbohrwerkzeug in gewissem Abstand von dieser angeordnet.

Die geräuschdämpfende Wirkung des Schwingungsdämpfers kann man insbesondere beim Ansetzen des Tiefbohrwerkzeuges wahrnehmen. Ohne Schwingungsdämpfer ergibt sich gelegentlich ein typisches Anbohrgeräusch, das bei Verwendung des Schwingungsdämpfers nicht mehr wahrnehmbar ist. Ganz offensichtlich beeinflußt also die elastische Masse an einer bestimmten Stelle entlang des Schaftes, die ggf. durch Experimentieren festgestellt werden muß, auch das Schneidverhalten im dynamischen Bereich in ganz wesentlicher Weise.

Diese Erfindung wird auch nicht nahegelegt durch eine Anordnung, wie sie bspw. aus der deutschen Auslegeschrift 21 42 549 bekannt geworden ist. Dort ist die Ausbildung der Einspannstelle eines Bohrwerkzeuges derart gezeigt, daß Schwankungen des Drehmoments, also Torsionsschwankungen, aufgefangen werden. Zu diesem Zwecke ist der Kopfteil des Bohrschaftes in der Antriebsspindel in einem Gleitlager gelagert und mit der Antriebsspindel in Drehrichtung über ein Dämpfungselement gekoppelt. Dabei ist besonders darauf geachtet, daß die Biegekräfte — und demgemäß auch Biegeschwingungen — keinen Einfluß auf die Lagerung haben, die ausschl. Stöße des Drehmoments, also ein Rattern, auffangen soll. Im Gegensatz dazu handelt es sich bei der vorliegenden Erfindung um einen Schwingungsdämpfer, der vor der Einspannstelle des Bohrers bzw. des Bohrerschaftes auf den Bohrerschaft bzw. auf das Bohrrohr aufgesteckt wird und dadurch die Biegeschwingungen dämpft. Offenbar findet hier in dem sehr weichen Bereich zwischen dem Bohrschaft bzw. dem Bohrrohr einerseits und der metallischen Außenhülse andererseits eine Absorption der Wellen, u. U. nach mehrmaliger Reflektion statt ; möglicherweise ist es auch derart, daß in dem weichen Material selbst, durch die Schwingungen des Bohrschaftes oder des Bohrrohrs angeregt, neue Schwingungen entstehen, die zusammen mit den Schwingungen des Bohrschaftes oder des Bohrrohrs insgesamt eine Dämpfungswirkung ergeben. Auf alle Fälle ergibt sich, daß das weichelastische Material des Schwingungsdämpfers sich in Betrieb etwas erwärmt und auf dem Bohrrohr oder Bohrschaft « anbackt ». Es entsteht also eine sehr innige Verbindung der weichelastischen Masse mit der Oberfläche des Bohrschafts oder des Bohrrohrs, die allerdings mit einer starken Zange auch wieder gelöst werden kann. Wenngleich die physikalischen Zusammenhänge, wie erwähnt, nicht vollständig aufgeklärt sind, so scheint es auch möglich zu sein, daß eine Walkarbeit innerhalb der weichelastischen Masse dadurch stattfindet, daß sie — als Folge der Wirkung der metallischen Außenhülse — entlang des Bohrschaftes oder Bohrrohrs von den Schwinungen verschieden stark komprimiert wird. Eine derartige Wirkung geht von der Torsionsschwingungsgedämpften Spannhülse nach der genannten DE-AS 21 42 549, die auch von der Anmelderin stammt, nicht aus. Es findet vielmehr bei dieser bekannten Anordnung keine Dämpfung der Biegeschwingungen statt.

Ausführungsbeispiele der Erfindung und ihrer vorteilhaften Weiterbildungen sind im folgenden unter Bezugnahme auf die beigefügten Zeichnungen beschrieben. Es stellen dar :

Figur 1   einen Einlippenbohrer nach dem Stande der Technik ;
Figur 2   einen Schnitt entlang der Linie II-II in Figur 1 ;
Figur 3   einen Einlippenbohrer mit aufgesetztem Schwingungsdämpfer gemäß einem Ausführungsbeispiel der Erfindung ;
Figur 4   einen Schnitt entlang der Linie IV-IV in Figur 3 ;
Figur 5   einen Schwingungsdämpfer bei einem BTA-Werkzeug ;
Figur 6   einen Schnitt entlang der Linie V-V in Figur 5 ;
Figur 7   einen Schwingungsdämpfer beim Ejektorverfahren.

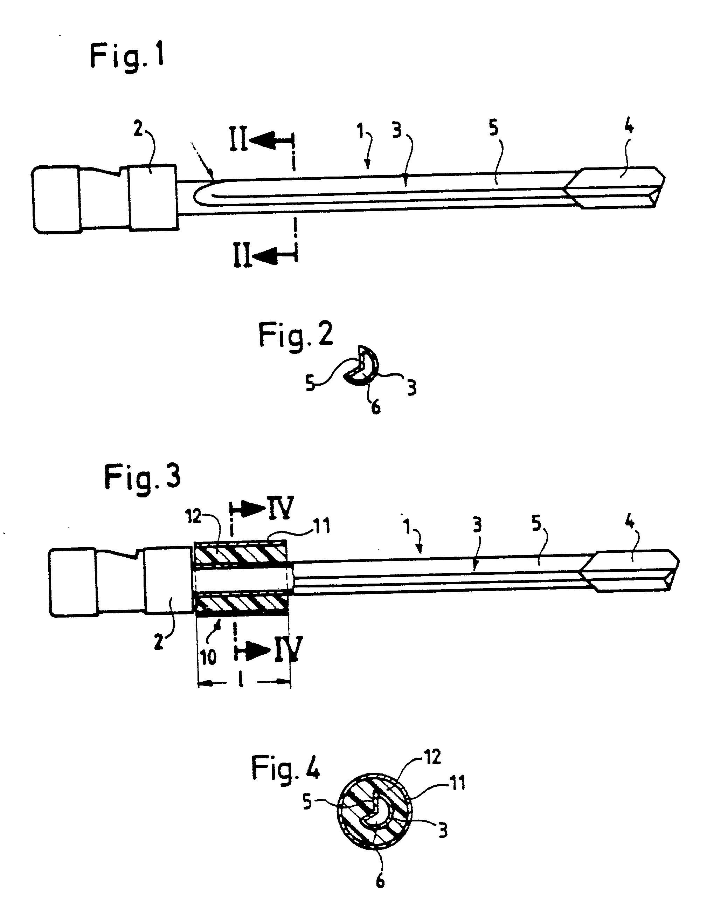

Figur 1 zeigt ein Tiefbohrwerkzeug nach dem Stande der Technik als Einlippenbohrer 1, bestehend aus einer Hülse (Spannelement) 2, einem Schaft 3 und einem Kopf 4. Am rechten Ende des Kopfes 4 sind die eigentlichen Bohrschneiden angeordnet. Die Zuführung des Kühl- und Schmiermittels erfolgt durch den Kanal 6 im Innern des Schaftes ; die Abfuhr des Kühl- und Schmiermittels und der durch das Bohren entstehenden Späne erfolgt in der Nut 5. Die Nut läuft zum linken Ende des Schaftes 3 hin, welcher in der Hülse 2 fest aufgenommen ist, aus.

Beim Ausführungsbeispiel nach Figur 3 ist nun auf den Schaft 3 und diesen umgebend in Nähe seines Endes an der Stelle seiner Aufnahme in der Hülse 2 ein Schwingungsdämpfer 10 vorgesehen. Dieser besteht aus einer äußeren Hülse 11, sowie einem Dämpfungskörper 12. Die Hülse 11 kann aus Blech, Aluminium oder Kunststoff hergestellt sein ; der Dämpfungskörper besteht beispielsweise aus stark elastischem leichtem Metall mit gummi- oder kautschukähnlicher fester Konsistenz. Die Elastizität beträgt ca. 50-60 Shore.

Wichtig ist, daß sich das Material des Dämpfungskörpers 12 innen direkt an die Außenfläche des Schaftes 3 anschließt. Um dies zu gewährleisten, erfolgt die Herstellung so, daß man bei aufrechtstehenden (also anders wie in Figur 3 angeordnetem) Einlippenbohrer 1 das Ende nahe der Hülse 2 mit der Hülse 11 umgibt und dann mit dem genannten Material ausgießt und es fest werden lässt. Dadurch ist gewährleistet, daß sich das Material des Dämpfungskörpers 12 über den ganzen Längenabschnitt, über den der Schwingungsdämpfer 10 den Schaft 3 umgibt, direkt an die Außenfläche des Schaftes 3 anschließt und auch das allmähliche Auslaufen der Nut 5 zum (in Figur 3) linken Ende des Schaftes 3 hin mitmacht.

Beim Ausführungsbeispiel nach Figur 3 ist ein relativ kurzes Tiefbohrwerkzeug gezeigt. Entsprechend ist der Schwingungsdämpfer 10 nahe der Hülse 2 angeordnet ; bei längeren Werkzeugen wird der Schwingungsdämpfer 10 auf dem Schaft etwas weiter vorne angeordnet. Die optimale Stelle muß durch Ausprobieren ermittelt werden.

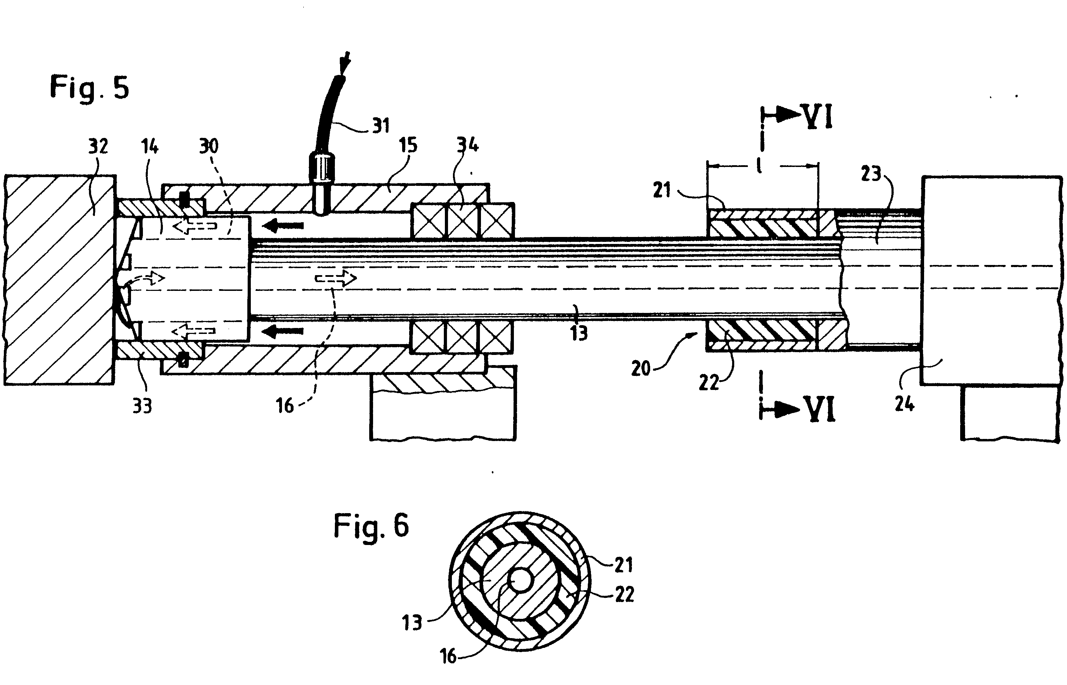

Beim Ausführungsbeispiel nach Figur 5 und 6 ist der Schwingungsdämpfer bei einem Tiefbohrwerkzeug für das BTA-Verfahren gezeigt. In bekannter Weise wird das Tiefbohrwerkzeug durch einen Schaft 13 gebildet, auf dessen Ende der Bohrkopf 14 aufgebracht ist. Entlang des Umfanges des Bohrkopfes 14 befinden sich Nuten 30. Die Zuführung des Kühl- und Schmiermittels erfolgt nun über eine Leitung 31 und einen Kühlmittelzuführapparat 15, und zwar entlang des äußeren Umfanges des Rohres 13 und über die Nuten 30 zur Bohrstelle. Die Abfuhr des Kühl- und Schmiermittels von der Bohrstelle, einschließlich der beim Bohren entstehenden Späne erfolgt dann über den Kanal 16 im Inneren des Rohres 13. Dieses sog. BTA-Verfahren wendet man bei größeren Durchmessern an, da höhere Drehmomente wie bei dem oben beschriebenen Einlippenbohrverfahren mit derartigen Werkzeugen möglich sind. Die Abdichtung des Kühlmittelzuführapparates 15 gegenüber dem Werkstück 32 erfolgt mit Hilfe einer Bohrbuchse 33 ; die Abdichtung gegenüber dem Rohr 13 erfolgt mit Hilfe einer Stopfbuchse 34. Das Rohr 13 ist mit einem Spannelement 23 fest verbunden, das dann im Spannfutter 24 einer Bohrspindel fest aufgenommen wird.

In diesem Falle ist, wie in Figur 5 dargestellt, der Schwingungsdämpfer 22 zwischen dem Kühlmittelzuführapparat 15 und dem Spannelement 23 angeordnet. Er wird ebenfalls dadurch gebildet, daß der Zwischenraum zwischen einer metallischen Hülse 21 und dem Rohr 13 durch einen elastischen Dämpfungskörper 22 ausgefüllt ist. Bei einem Ausführungsbeispiel ergaben sich folgende Maße: für eine Bohrtiefe von 800 mm im Werkstück 32 und einen Bohrdurchmesser von 45 mm wurde eine Hülse mit einem Durchmesser von 70 mm und einer Länge von 300 mm eingesetzt.

Bei den BTA-Verfahren ergab sich eine besonders deutliche Schwingungsminderung, die sich einmal darin äußerte, daß das Bohrgeräusch mit Schwingungsdämpfer sehr viel niedriger war als ohne. Zum andern ergab sich eine sehr viel geringere mechanische Übertragung von Schwingungen vom Tiefbohrwerkzeug auf die übrigen Bauteile der Tiefbohrmaschine. In einem Fall war die Übertragung der Schwingungen auf die übrigen Bauteile so stark, daß zum Teil sich Dauerbrüche bei Zahnrädern ergaben. Durch die Verwendung der Schwingungsdämpfer konnte dies vollkommen ausgeschaltet werden.

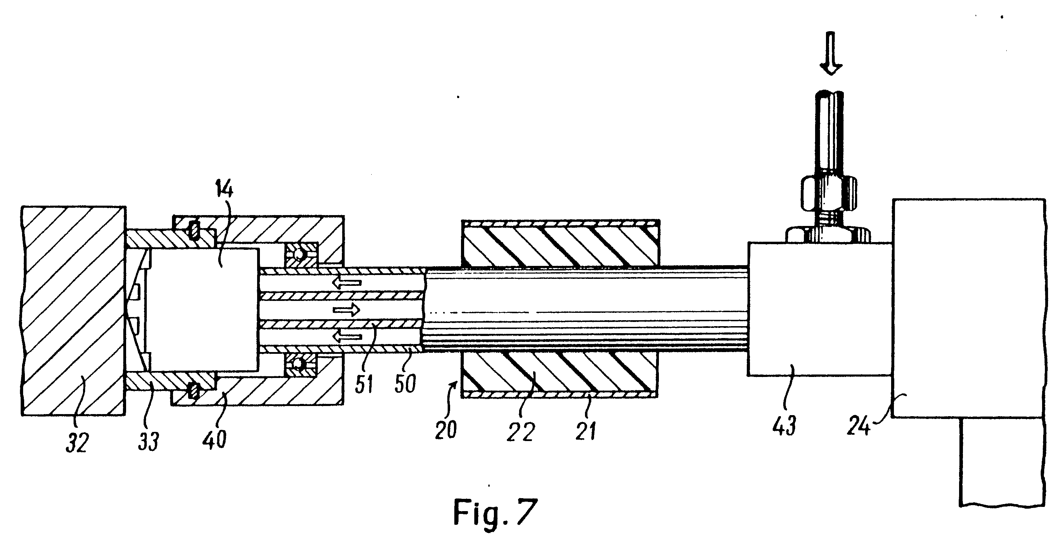

Fig. 7 zeigt, wie die Erfindung auch beim sog. Ejektorverfahren Anwendung finden kann. Beim Ejektorverfahren ist der Bohrkopf auf einem Doppelrohr befestigt, das durch Außenrohr 50 und Innenrohr 51 gebildet wird. Das Kühl- und Schmiermittel wird über das Anschlußstück 43 und von dort über den Raum zwischen Außenrohr 50 und Innenrohr 51 an die Bohrstelle zugeführt und von der Bohrstelle über das Innenrohr 51 abgeführt. Die Bohrbuchse 33 zur Führung des Bohrkopfes 14 beim Anbohren wird von einem Bohrbuchsenhalter 40 gegen das Werkstück 32 gedrückt. Die Bohrspindel ist mit 24 bezeichnet. In diesem Fall sitzt der Schwingungsdämpfer 20 an beliebiger Stelle zwischen Bohrbuchsen 33 (bzw. Bohrbuchsenhalter 40) einerseits und Anschlußstück 43 andererseits.

Die Abmessungen eines Schwingungsdämpfer hängen natürlich von den konkreten Betriebsumständen ab. Im folgenden werden einige Beispiele gegeben :

Beim Einlippen-Bohrverfahren (Figuren 1 bis 4) sollte der äußere Durchmesser des Schwingungsdämpfers, also etwa der Durchmesser der metallischen Hülse 11 nach Figur 3, ca. 25 mm größer als der Durchmesser des Schaftes 3 des Einlippenbohrers 1 sein. Die Länge des Schwingungsdämpfers sollte nicht geringer als ca. 80 mm sein ; maximal sollte sie 250 mm betragen. Es richtet sich im allgemeinen nach der Länge des gesamten Einlippenbohrers. Es richtet sich ferner danach, wieviel Platz im konkreten Einzelfall zur Verfügung steht.

Beim BTA-Verfahren (vgl. Figur 5) und beim Ejektorverfahren (vgl. Figur 7) sollte der Außendurchmesser des Schwingungsdämpfers gleich dem Durchmesser des Bohrrohrs plus ca. 55 mm sein. Die Länge des Schwingungsdämpfers hängt vom Bohrdurchmesser ab. Bei Bohrdurchmessern von bis zu 70 mm wurde bspw. als Länge für den Schwingungsdämpfer ein Maß von 350-400 mm gewählt. Bei Bohrdurchmessern von mehr als 70 mm wurde zufriedenstellend mit einer Länge des Schwingungsdämpfers von 500 mm gearbeitet.

Es wurde bereits eingangs darauf hingewiesen, daß sich mit dem erfindungsgemäßen Bohrer eine erhebliche Erhöhung der Standzeiten und eine erhebliche Absenkung der beim Bohrvorgang entstehenden Geräusche ergibt. Im einzelnen wird dazu auf die beigefügte Tabelle verwiesen, sie gibt Ergebnisse von Versuchen mit und ohne Schwingsungsdämpfer wieder. Dabei ist in Spalte 1 aufgeführt, um was für eine Art Werkstück es sich handelt. Es wurden Antriebswellen, gewöhnliche Wellen, Gesteinsbohrkronen, Flugzeugteile (Federbein), sowie Pumpenteile bearbeitet. Bei allen diesen Teilen handelt es sich um typische im Tiefbohrverfahren zu bearbeitende Einzelteile. Dabei wurden sowohl Versuche mit dem Einlippen-Bohrverfahren als auch mit dem BTA-Verfahren gemacht. Um welches Verfahren es sich jeweils gehandelt hat, ist in Spalte 2 angegeben. In Spalte 3 ist angegeben, um was für ein Werkzeug es sich handelt. Spalte 4 gibt die Drehzahl des Werkzeuges an, Spalte 5 die Vorschubgeschwindigkeit. Spalte 6 gibt die Abmessung des Schwingungsdämpfers nach Durchmesser und Länge. In Spalte 7 ergibt sich die Standzeit mit und ohne Schwingungsdämpfer, d.h. die gebohrte Bohrlänge bis zu dem Zeitpunkt, in dem ein neuer Anschliff des Bohrers erforderlich wurde. Für das Bohren der Gesteinsbohrkronen ist die Anzahl der Bohrungen angegeben.

Ein Anschliff wurde jeweils dann neu vorgenommen, wenn sich an der Schneide ein Materialabtrag von 0,5 mm entlang des äußersten Umfangskreises ergeben hatte. Aus dem Vergleich nach Spalte 7 ergibt sich, daß bei der Erfindung die Standzeit etwa auf das Vierfache steigt. Dieser Erfolg ist ganz erheblich.

In Spalte 8 ist für einige der Messungen der gemessene Geräuschpegel angegeben. Auch hier ergibt siche eine beachtliche Absenkung, nämlich z. B. bei einer Bearbeitung von Wellen durch Verwendung eines Schwingungsdämpfers im Einlippen-Bohrverfahren eine Absenkung von 90 dB (A) auf 75-80 dB (A) ; bei einem Pumpenteil bei Bearbeitung mit dem BTA-Verfahren ergab sich im einen Fall eine Absenkung von 110 auf 90 dB (A), also eine Senkung um 20 dB (A).

(Siehe Tabelle Seite 5 f.)

Bohrergebnisse mit und ohne Schwingungsdämpfer

| (1) | (2) | (3) | (4) | (5) | (6) | (7) | | (8) | |
|---|---|---|---|---|---|---|---|---|---|
| Werkstück | Bohrver-fahren | Werkzeug Durchm. x Länge (mm) | Drehzahl U/min | Vorschub-geschw. mm/min | Abmessung Schwing. dämpfer x Länge (mm) | Standzeit in m pro Anschliff | | Geräusch dB(A) | |
| | | | | | | mit | ohne | mit | ohne |
| Antriebs-wellen | ELB | 15 x 550 | 2100 | 125 | 35 x 160 | 66 m | 16 m | | |
| " | ELB | 15 | 2100 | 125 | 30 x 140 | 77,5m | 27,5m | | |
| Wellen | ELB | 17,5 x 1000 | 1450 | 80 | 30 x 90 | | | 75-80 | 90 |
| Gesteins-bohrkronen | ELB | 9,5 x 400 | Schnitt-geschw. v = 45 m/min | 40 | 40 x 110 | ca.300 – 400 Boh-rung. | ca.90 – 100 Boh-rung. | | |
| | | 19,01 x 400 | | | | | | | |
| Flugzeug-teile (Federbein) | BTA | 50,3 x 2000 | 250 | 50 | 80 x 350 | 12 Teile | 5 Teile | 82 | 90 |
| Pumpenteil | BTA | 150 x 3000 | 300 | 90 | 180 x 500 | | | 90 | 110 |

0 090 929

**Patentansprüche**

1. Tiefbohrwerkzeug mit einem einen Bohrkopf tragenden Schaft (3), der an seinem rückwärtigen Ende mit einem Spannelement (2) zum Befestigen an einer Werkzeugmaschinenspindel versehen ist, wobei auf dem Bohrerschaft vor dem Spannelement (2) ein Schwingungsdämpfer angeordnet ist, dadurch gekennzeichnet, daß der Schwingungsdämpfer (10) durch eine den Schaft (3) des Tiefbohrwerkzeuges (1) über einen bestimmten Bereich umgebende Hülse (11) gebildet ist, wobei der Zwischenraum zwischen der Hülse (11) und dem äußeren Umfang des Schaftes (3) mit einer elastischen festen Masse gefüllt ist, die sich direkt an die Außenfläche des Schaftes (3) anschließt.

2. Tiefbohrwerkzeug nach Anspruch 1, dadurch gekennzeichnet, daß der Schwingungsdämpfer (20) bei kurzem Tiefbohrwerkzeug (1) in Nähe des den Schaft (3) desselben (1) aufnehmenden Spannelementes (2) angeordnet ist und bei langem Tiefbohrwerkzeug (1) in einem Abstand von dem den Schaft (3) aufnehmenden Spannelement (2) angeordnet ist.

3. Tiefbohrwerkzeug nach Anspruch 1, zur Verwendung beim BTA-Verfahren, bei dem das Kühl- und Schmiermittel über eine Kühl- und Schmiermittelzuführeinrichtung (15) entlang des Umfangs eines den Bohrkopf (14) tragenden Rohres (13) zugeführt und über einen Kanal (16) in dem Rohr (13) abgeführt wird, dadurch gekennzeichnet, daß der Schwingungsdämpfer (20) zwischen Kühlmittelzuführapparat (15) und Spannelement (23) angeordnet ist.

4. Tiefbohrwerkzeug nach Anspruch 1, zur Verwendung beim Ejektorverfahren, bei dem der Bohrkopf (14) auf einem durch Innenrohr (51) und Außenrohr (50) gebildeten Doppelrohr aufgebracht ist und das Kühl- und Schmiermittel über ein Anschlußstück (43) zwischen Außen- und Innenrohr zugeführt und über das Innenrohr (51) abgeführt wird, dadurch gekennzeichnet, daß der Schwingungsdämpfer (20) zwischen Anschlußstück (43) und einer am Werkstück (32) anliegenden Bohrbuchse (33) angeordnet ist.

**Claims**

1. Deep-drilling tool having a shaft, said shaft carrying a drill head and, at his rear end provided with a clamping element for mounting it to a tool-spindle of a machine tool wherein vibration damper is provided on the drill shaft ahead of the clamping element, characterized in that said vibration damper (10) is constituted by a sleeve (11) surrounding the shaft (3) of the deep-drilling tool (2) over a predetermined length and in that the space between the sleeve (11) and the outer periphery of the shaft (3) is filled with an elastic solid mass directly adjacing the outer surface of the shaft (3).

2. Deep-drilling tool as defined in claim 1, wherein said vibration damper (10) in case of a short deep-drilling tool (1), is mounted close to the clamping element (2), in which said shaft (3) is received, and that, in case of a long deep-drilling tool (1), the vibration damper (10) is mounted at a certain distance to the clamping element (2), in which said shaft (3) is received.

3. Deep-drilling tool as defined in claim 1, for use in accordance to the BTA method, with which the cooling and lubricating medium is supplied by a cooling and lubricating medium supply device along the periphery of a tube (13) carrying the drill head (14) and is discharged by a channel (16) within said tube (13), characterized in that said vibration damper (20) is mounted between said cooling medium supply devices (15) and the clamping element (23).

4. Deep-drilling tool as defined in claim 1 for use in accordance to the ejector method, with which the drilling head (14) is mounted on a double tube as formed by an inner tube (51) and an external tube (50), and with which the cooling and lubricating medium is supplied by a fitting (43) between the external and the inner tube and is discharged by the inner tube (51), characterized in that said vibration damper (20) is mounted between the fitting (43) and a drill bushing (33), which abuts then a work piece (32).

**Revendications**

1. Outil à forer des trous profonds avec un arbre (3) portant une couronne d'alésage, l'extrémité arrière de l'arbre étant munie d'un élément de serrage (2) pour la fixation sur une barre d'alésage, un amortisseur de vibrations étant monté sur l'arbre à forer devant l'élément de serrage (2), caractérisé en ce que l'amortisseur de vibrations (10) est constitué par un fourreau (11) entourant l'arbre (3) de l'outil à forer (1) sur une zone déterminée, l'espace intermédiaire compris entre le fourreau (11) et la périphérie extérieure de l'arbre (3) étant rempli d'une masse solide élastique qui jouxte directement la face extérieure de l'arbre (3).

2. Outil à forer selon la revendication 1, caractérisé en ce que, dans le cas d'un outil à forer (1) court, l'amortisseur de vibrations (20) est disposé au voisinage de l'élément de serrage (2) recevant l'arbre (3) de l'outil (1) et que dans le cas d'un outil à forer (1) long, l'amortisseur de vibrations (20) est disposé à une certaine distance de l'élément de serrage recevant l'arbre.

3. Outil à forer selon la revendication 1, pour la mise en œuvre d'un procédé BTA, dans lequel l'agent de refroidissement et de lubrification est amené à travers un dispositif d'amenée (15) pour agent de refroidissement et de lubrification le long de la périphérie d'un tube (13) portant la couronne d'alésage

(14) et qu'il est évacué à travers un canal (16) disposé dans le tube (13), caractérisé en ce que l'amortisseur de vibrations (20) est disposé entre l'appareil d'amenée (15) de l'agent de refroidissement et l'élément de serrage (23).

4. Outil à forer selon la revendication 1, pour la mise en œuvre dans un procédé à éjecteur, dans lequel la couronne d'alésage (14) est montée sur un double tube constitué par le tube intérieur (51) et le tube extérieur (50) et l'agent de refroidissement et de lubrification est amené à travers une pièce de raccordement (43) située entre les tubes extérieurs et intérieurs et il est évacué à travers le tube intérieur (51), caractérisé en ce que l'amortisseur de vibrations (20) est disposé entre la pièce de raccordement (43) et une douille guide-foret (33) s'appuyant sur la pièce à usiner (32).

Fig. 1

Fig. 2

Fig. 3

Fig. 4

# Fig. 5

0 090 929

# Fig. 6

Fig. 7

0 090 929